# EUROPÄISCHE PATENTSCHRIFT

(11) **EP 1 698 220 B1**
(45) Veröffentlichungstag und Bekanntmachung des Hinweises auf die Patenterteilung: **13.05.2009**
(21) Anmeldenummer: 06004070.6
(22) Anmeldetag: 28.02.2006
(51) Int. Cl.: A01C 23/00, B60P 3/22

(54) **Transportable Pumpeneinrichtung**
Mobile pumping device
Dispositif de pompage mobil

(30) Priorität: 02.03.2005 DE 202005003318 U; 14.10.2005 DE 202005016105 U
(43) Veröffentlichungstag der Anmeldung: 06.09.2006
(73) Patentinhaber: Hugo Vogelsang Maschinenbau GmbH, 49632 Essen (DE)
(72) Erfinder: Deyen, Heinz, 49688 Lastrup (DE); Krampe, Paul, 49632 Essen (DE); Elbers, Gudio, 49632 Essen (DE)
(74) Vertreter: Glaeser, Joachim

(56) Entgegenhaltungen:
- EP-A- 1 157 601
- DE-A1- 3 415 407
- DE-A1- 3 606 272
- DE-A1- 10 137 813
- DE-U1- 29 922 096

## Beschreibung

Die Erfindung betrifft eine transportable Pumpeinrichtung zur Aufnahme und zum Ausbringen von Flüssigkeiten, organischen Suspensionen oder Gülle auf landwirtschaftliche Nutzflächen, aufweisend eine Kreiselpumpe, einen Schieber in der Leitung der Kreiselpumpe und eine Hilfspumpe.

Derartige Pumpeinrichtungen sind bekannt (DE 34 15 407 A1)

Es gibt auch Kreiselpumpen, so genannte Powerfills, die bisher bei Vakuumtankwagen mit der Aufgabe eingesetzt werden, die Vakuumpumpe beim Befüllen des Tankwagens zu unterstützen. Beim Arbeiten mit diesem System ergab sich, dass insbesondere bei dünnflüssiger Gülle die Kreiselpumpe beim Befüllen des Tankwagens eine so hohe Förderleistung hat, dass die Vakuumpumpe ausgeschaltet werden konnte. Da eine Kreiselpumpe jedoch nicht selbst ansaugen kann, benötigt sie immer dann ein Vakuumsystem, wenn sie "trocken" eingesetzt wird, d.h. nicht in "getauchter" Weise arbeiten kann, bei der ihr die Flüssigkeit zuläuft.

Durch die vorliegende Erfindung soll eine Pumpeinrichtung der eingangs genannten Art so ausgestaltet werden, dass ein unproblematischer Betrieb sichergestellt wird, selbst dann, wenn zuvor Flüssigkeit angesaugt werden muss.

Erreicht wird dies durch eine transportable Pumpeinrichtung der eingangs genannten Art, bei welcher die Hilfspumpe als Drehkolbenpumpe ausgebildet und parallel zum Schieber angeordnet ist, wobei in Sperrstellung des Schiebers Flüssigkeit über die Drehkolbenpumpe geführt wird und in geöffneter Stellung des Schiebers die Drehkolbenpumpe abgeschaltet wird bzw. bleibt.

Bei der Pumpeinrichtung gemäß der Erfindung kann die Kolbenpumpe mit Hilfe des Schiebers ein- und ausgeschaltet werden, so dass die Pumpeinrichtung dadurch in Betrieb genommen werden kann, dass der Schieber in seine Sperrstellung gebracht wird, wodurch die Kolbenpumpe mit ihrer Ansaugtätigkeit beginnt. Wird Flüssigkeit in den Tank gefördert, kann durch Betätigen des Schiebers in seine geöffnete Stellung die Kolbenpumpe abgeschaltet werden, wobei zuvor die Kreiselpumpe eingeschaltet worden ist. Es ist auch denkbar, dass die Kreiselpumpe eingeschaltet wird, wenn im Zulauf zur Kolbenpumpe bzw. im Bereich des Schiebers ein entsprechender Druck festgestellt wird.

Nach weiteren Ausführungsformen der Pumpeinrichtung gemäß der Erfindung kann die Drehkolbenpumpe mittels eines Ölmotors oder über die Hydraulikanlage eines Pumpentankwagens oder eines Schleppers angetrieben werden

Die Erfindung wird nachstehend anhand der Zeichnungen beispielsweise erläutert.
- Fig. 1: zeigt eine Seitenansicht einer Pumpeinrichtung gemäß der Erfindung.
- Fig. 2: zeigt eine Vorderansicht der Pumpeinrichtung gemäß der Erfindung, wobei die Kolbenpumpe in Tätigkeit ist.
- Fig. 3: zeigt eine Vorderansicht der Pumpeinrichtung gemäß der Erfindung, wobei die Kolbenpumpe nicht in Tätigkeit ist.

In den Figuren trägt die Kreiselpumpe die Zahl 11 und die Kolbenpumpe die Zahlt 12.

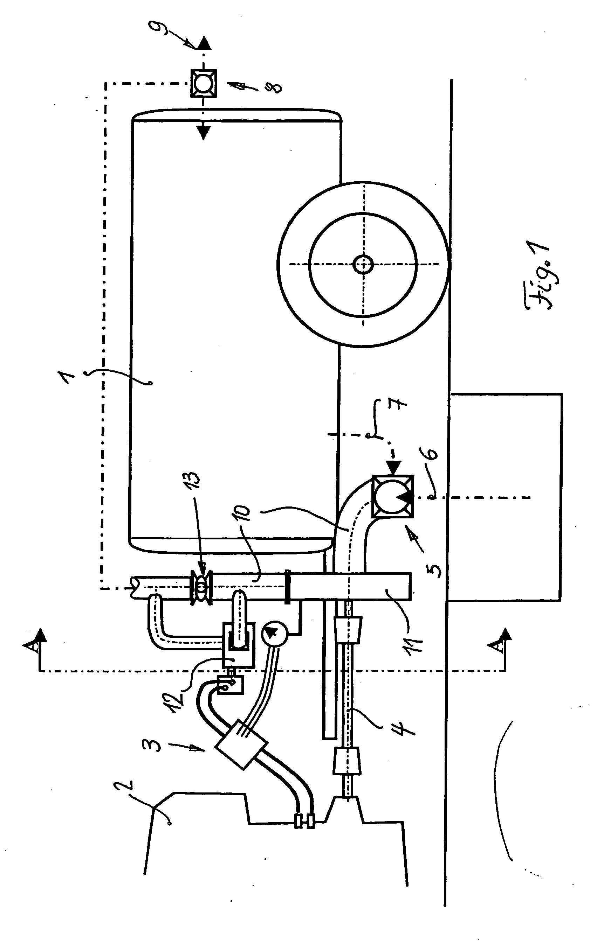

In den Figuren 1 bis 3 ist mit 1 der Tank eines Pumpentankwagens bezeichnet. Der Pumpentankwagen wird antriebs- und versorgungsmäßig mit einem Schlepper 2 verbunden. So führt eine Gelenkwelle 4 vom Schlepper 2 zu der Kreiselpumpe 11 und eine Steuereinrichtung 3 ist über Hydraulikleitungen mit dem Hydrauliksystem des Schleppers 2 verbunden und dient als Antrieb für einen Hydraulikmotor, der seinerseits die Drehkolbenpumpe 12 antreiben kann.

Die Kreiselpumpe 11 ist in einer Leitung, einer Druckleitung, angeordnet, die mit 10 bezeichnet ist und die einerseits zu einem 3-Wege-Hahn 5 führt und andererseits über einen Absperrschieber 13 unterbrochen werden kann. Die Druckleitung 10 führt weiter zum hinteren Ende des Tanks 1 und dort zu einem 3-Wege-Hahn 8, durch den in der entsprechenden Stellung über eine Ansaugleitung 6 angesaugte Flüssigkeit entweder in den Tank 1 gegeben werden kann oder zum Ausbringsystem 9 geführt wird. Soll im Tank 1 vorhandene Flüssigkeit zum Ausbringsystem 9 gepumpt werden, so wird der 3-Wege-Hahn 5 so eingestellt, dass über eine Saugleitung 7 die Flüssigkeit aus dem Tank in die Leitung 10 gesaugt wird.

Soll Flüssigkeit aus einer Vorgrube oder aus dem Tank 1 angesaugt werden, wird wie folgt vorgegangen:

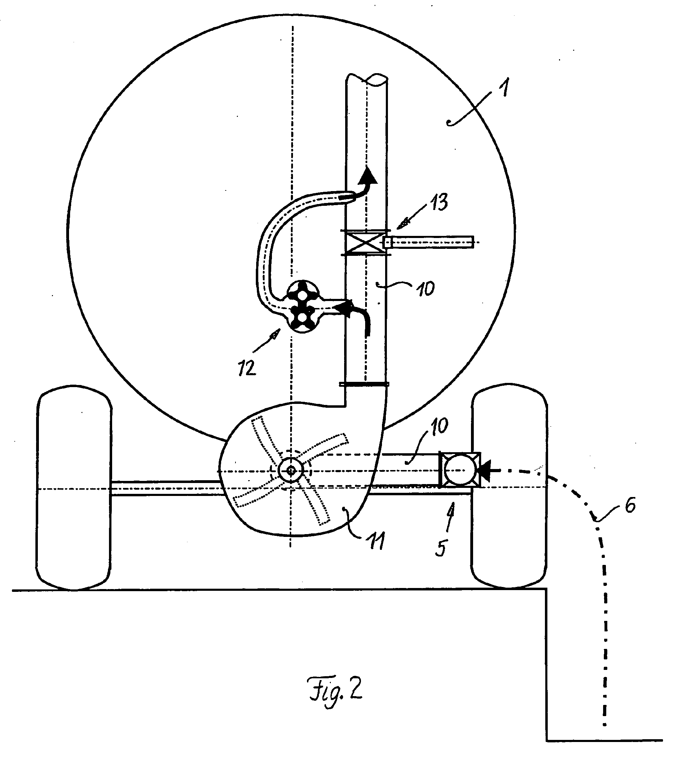

Der 3-Wege-Hahn 5 wird in die entsprechende Stellung gebracht und die Drehkolbenpumpe 12 wird über den Hydraulikmotor angetrieben. Für diese Funktion nimmt der Schieber 3 die in Fig. 2 gezeigte Lage ein, d.h. die Leitung 10 wird abgesperrt und die von Drehkolbenpumpe 12 angesaugte Flüssigk,keit kann nur über den Bypass zum Schieber 13 gepumpt werden.

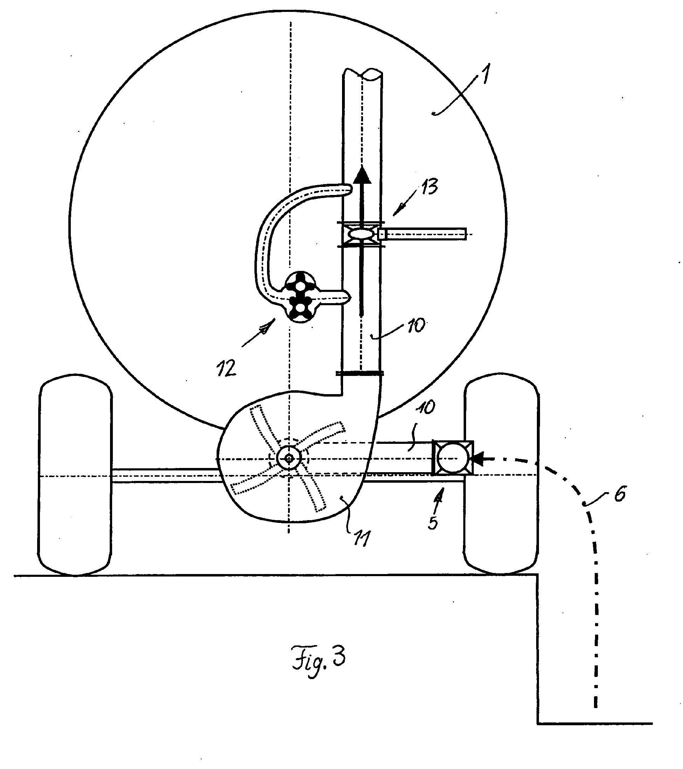

Wenn Flüssigkeit von der Kreiselpumpe 11 angesaugt wird, kann druckabhängig oder von Hand die Drehkolbenpumpe 12 abgestellt werden, wobei der Schieber 13 in die geöffnete Stellung in Fig. 3 gebracht worden ist. In dieser Situation kann die Kreiselpumpe 11 Flüssigkeit ansaugen und in den Tank leiten oder zum Ausbringsystem 9 fördern.

Bei einer bevorzugten Ausführungsform der Erfindung wird dieser Abschaltvorgang der Drehkolbenpumpe 12 durch die Betätigung des Schiebers 13 bewerkstelligt.

## Patentansprüche

1. Transportable Pumpeinrichtung zur Aufnahme und zum Transport und Ausbringen von Flüssigkeiten, organischen Suspensionen oder Gülle auf landwirtschaftliche Nutzflächen, aufweisend eine Kreiselpumpe (11), einen Schieber (13) in der Leitung der Kreiselpumpe und eine Hilfspumpe (12) **dadurch gekennzeichnet, dass** die Hilfspumpe als Drehkolbenpumpe (12) ausgebildet und parallel zum Schieber (13) angeordnet ist, wobei in Sperrstellung des Schiebers Flüssigkeit über die Drehkolbenpumpe geführt wird und in geöffneter Stellung des Schiebers die Drehkolbenpumpe abgeschaltet wird bzw. bleibt.

2. Pumpeinrichtung nach Anspruch 1, **dadurch gekennzeichnet, dass** die Drehkolbenpumpe (12) mittels eines Ölmotors angetrieben ist.

3. Pumpeinrichtung nach einem der Ansprüche 1 oder 2, **dadurch gekennzeichnet, dass** die Drehkolbenpumpe (12) über die Hydraulikanlage eines Pumpentankwagens oder Schleppers angetrieben ist.

## Claims

1. Transportable pumping arrangement for the reception and for the transport and discharge of liquids, organic suspensions or liquid manure onto agriculturally productive land, having a centrifugal pump (11), a slide (13) in the line of the centrifugal pump, and an auxiliary pump (12), **characterized in that** the auxiliary pump is designed as a rotary-piston pump (12) and is arranged parallel to the slide (13), liquid being routed via the rotary-piston pump in the shut-off position of the slide, and the rotary-piston pump being or remaining switched off in the open position of the slide.

2. Pumping arrangement according to Claim 1, **characterized in that** the rotary-piston pump (12) is driven by means of an oil engine.

3. Pumping arrangement according to either one of Claims 1 and 2, **characterized in that** the rotary-piston pump (12) is driven via the hydraulic system of a pump tanker or tractor.

## Revendications

1. Dispositif de pompe transportable pour la réception et le transport et l'épandage de fluides, suspensions organiques ou purin sur des surfaces agricoles utiles, comprenant une pompe gyroscopique (11), une vanne (13) dans la tubulure de la pompe gyroscopique et une pompe de secours (12), **caractérisé en ce que** la pompe de secours est formée comme une pompe à piston rotatif et est agencée parallèlement à la vanne (13), le fluide étant guidé vers la pompe à piston rotatif en position fermée de la vanne et la pompe à piston rotatif étant déconnectée ou conservée en position ouverte de la vanne

2. Dispositif de pompe selon la revendication 1, **caractérisé en ce que** la pompe à piston rotatif est entraînée au moyen d'un moteur à huile.

3. Dispositif de pompe selon l'une des revendications 1 ou 2, **caractérisé en ce que** la pompe à piston rotatif est entraînée par l'unité hydraulique d'un camion-citerne avec pompe ou d'un tracteur.
